(19) Europäisches Patentamt
European Patent Office
Office européen des brevets

(11) **EP 3 545 362 B1**

(12) **FASCICULE DE BREVET EUROPEEN**

(45) Date de publication et mention de la délivrance du brevet:
**09.03.2022 Bulletin 2022/10**

(21) Numéro de dépôt: **17811654.7**

(22) Date de dépôt: **22.11.2017**

(51) Classification Internationale des Brevets (IPC):
**G03H 1/08** (2006.01)    **G03H 1/04** (2006.01)

(52) Classification Coopérative des Brevets (CPC):
**G03H 1/0866; G01N 15/1434; G03H 1/0443;**
G01N 2015/0038; G01N 2015/008;
G01N 2015/1006; G01N 2015/144;
G01N 2015/1454; G03H 2001/0447;
G03H 2001/0883; G03H 2001/2655; G03H 2227/03;
G03H 2240/56; G03H 2240/62

(86) Numéro de dépôt international:
**PCT/FR2017/053214**

(87) Numéro de publication internationale:
**WO 2018/096269 (31.05.2018 Gazette 2018/22)**

(54) **PROCÉDÉ DE FORMATION D'UNE IMAGE DE HAUTE RÉSOLUTION PAR IMAGERIE SANS LENTILLE**

VERFAHREN ZUR HERSTELLUNG EINES HOCHAUFLÖSENDEN BILDES DURCH LINSENLOSE BILDGEBUNG

METHOD FOR FORMING A HIGH RESOLUTION IMAGE BY LENSLESS IMAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2016 FR 1661429**

(43) Date de publication de la demande:
**02.10.2019 Bulletin 2019/40**

(73) Titulaire: **Commissariat à l'énergie atomique et aux énergies alternatives**
**75015 Paris (FR)**

(72) Inventeurs:
• **BLANDIN, Pierre**
**38500 Coublevie (FR)**
• **BORDY, Thomas**
**38000 Grenoble (FR)**
• **CIONI, Olivier**
**38100 Grenoble (FR)**

(74) Mandataire: **INNOV-GROUP**
**310, avenue Berthelot**
**69372 Lyon Cedex 08 (FR)**

(56) Documents cités:
**US-A1- 2016 334 614    US-B2- 8 866 063**

• YIBO ZHANG ET AL: "Color calibration and fusion of lens-free and mobile-phone microscopy images for high-resolution and accurate color reproduction", SCIENTIFIC REPORTS, vol. 6, no. 1, 10 juin 2016 (2016-06-10), pages 1-14, XP055436507, DOI: 10.1038/srep27811
• A Greenbaum ET AL: "Maskless imaging of dense samples using pixel super-resolution based multi-height lensfree onchip microscopy", Optics Express, 30 janvier 2012 (2012-01-30), pages 3129-3141, XP055066626, Extrait de l'Internet: URL:http://www.opticsinfobase.org/DirectPD FAccess/680A1733-AB3A-8B47-2184FA4DAD68 10E C_226807/oe-20-3-3129.pdf?da=1&id=226807&s eq=0&mobile=no [extrait le 2013-06-13]

**Description**

## DOMAINE TECHNIQUE

L'invention appartient au domaine technique de l'imagerie sans lentille, pour l'observation d'échantillons, en particulier des échantillons biologiques. L'imagerie sans lentille consiste à observer un échantillon disposé entre une source de lumière et un capteur d'image, l'échantillon étant disposé à proximité du capteur d'image, sans optique de grossissement entre le capteur et l'échantillon.

## ART ANTERIEUR

L'observation d'échantillons, et en particulier des échantillons biologiques, par imagerie sans lentille connaît un développement important depuis ces dix dernières années. Cette technique permet d'observer un échantillon en le disposant entre une source de lumière et un capteur d'image, sans disposer de lentille de grossissement optique entre l'échantillon et le capteur. Ainsi, le capteur d'image collecte une image de l'onde lumineuse transmise par l'échantillon.

Cette image est formée de figures d'interférences entre l'onde lumineuse émise par la source et transmise sans diffraction par l'échantillon, et des ondes de diffraction, résultant de la diffraction, par l'échantillon, de l'onde lumineuse émise par la source. Ces figures d'interférences sont parfois dénommées figures de diffraction, ou hologrammes, ou désignées par le terme anglais « diffraction pattern ».

Le document WO2008090330 décrit un dispositif permettant l'observation d'échantillons biologiques, en l'occurrence des cellules, par imagerie sans lentille. Le dispositif permet d'associer, à chaque cellule, une figure d'interférences dont la morphologie permet d'identifier le type de cellule. L'imagerie sans lentille apparaît alors comme une alternative simple, et peu onéreuse, à un microscope classique. De plus, son champ d'observation est nettement plus important que ne peut l'être celui d'un microscope. On comprend alors que les perspectives d'applications liées à cette technologie sont importantes.

L'image formée sur le capteur d'image, comportant des figures d'interférences, peut être traitée par un algorithme de propagation numérique, de manière à estimer des propriétés optiques de l'échantillon. De tels algorithmes sont bien connus dans le domaine de la reconstruction holographique. Pour cela, la distance entre l'échantillon et le capteur d'image étant connue, on applique un algorithme de propagation, prenant en compte cette distance, ainsi que la longueur d'onde. On peut alors reconstituer une image d'une propriété optique de l'échantillon. Un algorithme de reconstruction numérique est par exemple décrit dans US2012/0218379.

Le brevet US8866063, du même auteur que la demande de brevet précédente, décrit un procédé permettant d'améliorer la résolution spatiale d'images obtenues par imagerie sans lentille. Pour cela, l'échantillon et le capteur d'image étant fixes, plusieurs images sont acquises de telle sorte qu'entre chaque image, la source de lumière est légèrement décalée. Un algorithme de traitement d'image permet alors de constituer une image, de résolution améliorée, en combinant les images ainsi acquises. Un procédé d'amélioration de la résolution spatiale d'une image est également décrit dans US2016/334614.

La publication Zhang Y "Color calibration and fusion of lens-free and mobile-phone microscopy images for high-resolution and accurate color reproduction" décrit un dispositif de formation d'une image de haute resolution par imagerie sans lentille.

Les inventeurs ont identifié une solution alternative, permettant d'améliorer la résolution spatiale d'images obtenues par imagerie sans lentille, tout en utilisant un dispositif simple et peu onéreux.

## EXPOSE DE L'INVENTION

Un objet de l'invention est un procédé de formation d'une image d'un échantillon comportant les étapes décrites dans la revendication 1. Un autre objet de l'invention est un dispositif tel que décrit dans la revendication 8.

Ainsi, contrairement à l'art antérieur, l'échantillon est fixe par rapport à la source de lumière. L'onde lumineuse atteignant le plan de détection est donc identique lors de chaque acquisition d'image. Le capteur d'image forme une image différente de cette onde lumineuse à chaque acquisition.

Le procédé peut comporter l'une des caractéristiques suivante, prises isolément ou selon les combinaisons techniquement réalisables :

- le capteur d'image est solidaire d'un transducteur piézoélectrique, le déplacement de la position dudit capteur d'image étant généré par une activation dudit transducteur piézoélectrique ;
- le déplacement du capteur d'image entre deux positions successives est aléatoire.
- chaque image acquise comportant une pluralité de pixels, la valeur maximale du déplacement entre deux images successives est de 5 fois, voire 10 fois, la distance entre deux pixels adjacents. Cela permet de maximiser le champ d'observation utile, ce dernier correspondant à l'intersection des champs d'observation de chaque image acquise.

- l'échantillon comporte des éléments diffractants, chaque image acquise par le capteur d'image comportant des figures de diffraction élémentaires, chaque figure de diffraction élémentaire étant associée à un élément diffractant de l'échantillon.

## FIGURES

La figure 1 représente un exemple de dispositif selon l'invention.

La figure 2 représente les principales étapes d'un procédé selon l'invention.

Les figures 3A, 3B et 3C montrent trois positions successives du capteur d'image par rapport à un échantillon.

La figure 4 illustre les déplacements successifs du capteur d'image au cours d'un premier essai expérimental.

Les figures 5A, 5B, et 5C représentent respectivement, en relation avec le premier essai expérimental, une image acquise, l'image acquise subpixellisée, ainsi qu'une image dite de haute résolution obtenue par la combinaison de 16 images subpixellisées et recalées.

Les figures 6A et 6B montrent respectivement un profil de l'intensité des pixels d'une ligne tracée sur les figures 5A et 5C.

La figure 7A est une image obtenue par application d'un opérateur de propagation holographique à l'image de la figure 5A. La figure 7B est un détail de la figure 7A.

La figure 7C est une image obtenue par application d'un opérateur de propagation holographique à l'image de la figure 5C. La figure 7D est un détail de la figure 7C.

La figure 8A est une image acquise par un capteur d'image au cours d'un deuxième essai expérimental. La figure 8B est un détail de la figure 8A. La figure 8C est une image de haute résolution formée au cours du deuxième essai expérimental, comportant l'acquisition de 16 images successives. La figure 8D est un détail de la figure 8C. La figure 8E montre le déplacement du capteur d'image entre chacune des 16 images acquises lors du deuxième essai expérimental.

## EXPOSE DE MODES DE REALISATION PARTICULIERS

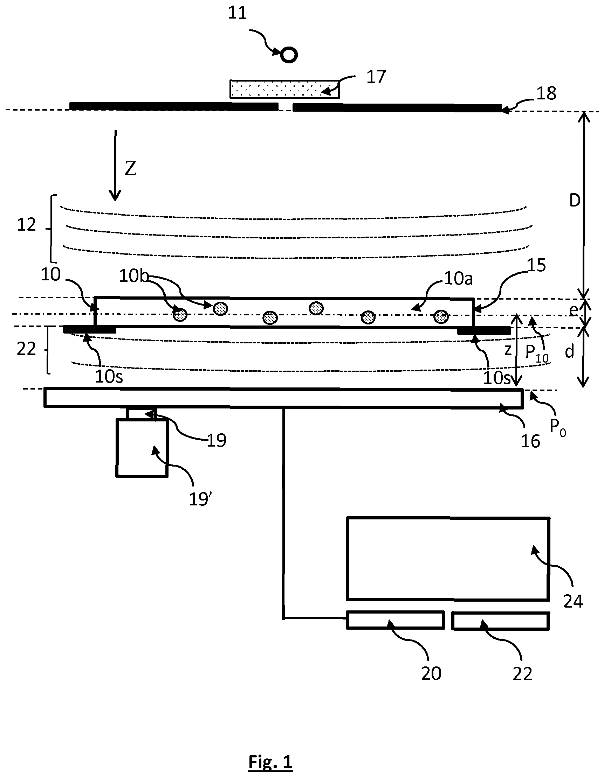

La figure 1 représente un exemple de dispositif selon l'invention. Une source de lumière 11 est apte à émettre une onde lumineuse 12, dite onde lumineuse incidente, se propageant en direction d'un échantillon 10, selon un axe de propagation Z. L'onde lumineuse est émise selon une bande spectrale $\Delta\lambda$.

L'échantillon 10 est un échantillon que l'on souhaite caractériser. Il peut notamment s'agir d'un milieu 10a comportant des particules 10b. Les particules 10b peuvent être des particules sanguines, par exemple des globules rouges ou des globules blancs. Il peut également s'agir de cellules, de microorganismes, par exemple des bactéries ou des levures, des microalgues, des microbilles, ou des gouttelettes insolubles dans le milieu liquide, par exemple des nanoparticules lipidiques. De préférence, les particules 10b ont un diamètre, ou sont inscrites dans un diamètre, inférieur à 1 mm, et de préférence inférieure à 100 $\mu$m. Il s'agit de microparticules (diamètre inférieur à 1 mm) ou de nanoparticules (diamètre inférieur à 1 $\mu$m). Le milieu 10a, dans lequel baignent les particules, peut être un milieu liquide, par exemple une phase liquide d'un liquide corporel, d'un milieu de culture ou d'un liquide prélevé dans l'environnement ou dans un procédé industriel. Il peut également s'agir d'un milieu solide ou ayant la consistance d'un gel, par exemple un substrat de type gélose, propice à la croissance de colonies bactériennes. L'échantillon 10 peut également être une lame de tissu, de type lame d'anatomopathologie.

L'échantillon 10 est contenu dans une chambre fluidique 15. La chambre fluidique 15 est par exemple une microcuvette, d'utilisation courante dans les dispositifs de type point of care, dans laquelle l'échantillon 10 pénètre, par exemple par capillarité. L'épaisseur e de l'échantillon 10, selon l'axe de propagation varie typiquement entre 20 $\mu$m et 1 cm, et est de préférence comprise entre 50 $\mu$m et 500 $\mu$m, par exemple 100 $\mu$m.

L'échantillon s'étend selon un plan $P_{10}$, dit plan de l'échantillon, perpendiculaire à l'axe de propagation. Il est maintenu sur un support 10s.

La distance D entre la source de lumière 11 et l'échantillon 10 est de préférence supérieure à 1 cm. Elle est de préférence comprise entre 2 et 30 cm. De préférence, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Ainsi, de préférence, la lumière parvient à l'échantillon sous la forme d'ondes planes, ou pouvant être considérées comme telles.

La source de lumière 11 peut être une diode électroluminescente ou une diode laser. Elle peut être associée à un diaphragme 18, ou filtre spatial, l'utilisation d'un tel filtre spatial n'étant pas nécessaire lorsque la source de lumière est une source laser. L'ouverture du diaphragme est typiquement comprise entre 5 $\mu$m et 1 mm, de préférence entre

50 $\mu$m et 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée face à l'échantillon 10.

Le dispositif comporte de préférence un diffuseur 17, disposé entre la source de lumière 11 et le diaphragme 18 en particulier lorsque la source de lumière est une diode électroluminescente. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par la source de lumière élémentaire 11 selon un cône d'angle a, a étant égal à 60° dans le cas présent. De préférence, l'angle de diffusion $\alpha$ varie entre 10° et 90°.

De préférence, la bande spectrale d'émission $\Delta\lambda$ de l'onde lumineuse incidente 12 a une largeur inférieure à 100 nm. Par largeur de bande spectrale, on entend une largeur à mi-hauteur de ladite bande spectrale.

L'échantillon 10 est disposé entre la source de lumière 11 et un capteur d'image 16. Ce dernier s'étend de préférence parallèlement, ou sensiblement parallèlement au plan selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 16 est apte à former une image selon un plan de détection $P_0$. Dans l'exemple représenté, il s'agit d'un capteur d'image comportant une matrice de pixels, de type CCD ou un CMOS. Chaque pixel est désigné 16 r, r représentant une coordonnée du pixel dans le plan de détection. Les CMOS sont les capteurs préférés, car la taille des pixels est plus faible, ce qui permet d'acquérir des images dont la résolution spatiale est plus favorable. Le plan de détection $P_0$ s'étend de préférence perpendiculairement à l'axe de propagation Z de l'onde lumineuse incidente 12. Le capteur d'image 16 est placé au contact d'un module piézoélectrique 19' permettant l'activation d'un transducteur piézoélectrique 19, ce dernier étant apte à se déplacer, dans un plan parallèle au plan de détection $P_0$, lorsqu'il est soumis à une excitation électrique. Le déplacement du transducteur piézoélectrique 19 entraîne un déplacement du capteur d'image 16 parallèlement au plan de détection $P_0$.

La distance d entre l'échantillon 10 et la matrice de pixels du capteur d'image 16 est préférentiellement comprise entre 50 $\mu$m et 2 cm, de préférence comprise entre 100 $\mu$m et 2 mm. De préférence, cette distance est maintenue constante, le capteur d'image 16 étant bloqué en translation selon l'axe de propagation Z, c'est-à-dire perpendiculairement au plan de détection $P_0$. Le blocage en translation peut être obtenu par des brides bloquant ou limitant une translation du capteur d'image selon l'axe Z.

On remarque l'absence d'optique de grossissement entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grossissement de l'image acquise par le capteur d'image.

Sous l'effet de l'onde lumineuse incidente 12, l'échantillon 10 peut engendrer une onde diffractée, susceptible de produire, au niveau du plan de détection $P_0$, des interférences, en particulier avec une partie de l'onde lumineuse incidente 12 transmise par l'échantillon. Par ailleurs, l'échantillon peut absorber une partie de l'onde lumineuse incidente 12. Ainsi, l'onde lumineuse 22, transmise par l'échantillon, et à laquelle est exposé le capteur d'image 16, peut comprendre :

- une composante résultant de la diffraction de l'onde lumineuse incidente 12 par l'échantillon ;
- une composante résultant de la transmission de l'onde lumineuse incidente 12 par l'échantillon.

Sous l'effet de la diffraction, chaque particule 10b présente dans l'échantillon peut donner lieu à la formation d'une figure de diffraction, ou hologramme, sur l'image acquise par le capteur d'image 16. Un tel hologramme se présente généralement sous la forme d'une tache centrale claire entourée par des anneaux de diffraction alternativement clairs et sombres. Plus la résolution spatiale de l'hologramme est élevée, meilleures sont les possibilités de caractérisation de la particule, notamment par le recours à des algorithmes de reconstruction holographique décrits par la suite.

Un processeur 20, par exemple un microprocesseur, est apte à traiter chaque image acquise par le capteur d'image 16. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

L'invention est basée sur le constat qu'une seule image d'un échantillon 10 peut présenter une résolution spatiale insuffisante pour une caractérisation précise des particules 10b. De même que dans le procédé décrit en lien avec l'art antérieur, plusieurs images de l'échantillon sont successivement acquises. Cependant, contrairement à l'art antérieur, la position relative de l'échantillon 10 par rapport à la source de lumière 11 est maintenue constante, tandis que la position relative du capteur d'image 16 par rapport à l'échantillon 10 varie entre l'acquisition de deux images successives. Plus précisément, entre chaque acquisition d'image, le transducteur piézoélectrique 19 est activé, de façon à engendrer un déplacement du capteur d'image parallèlement au plan de détection $P_0$. Le déplacement peut être aléatoire, ce qui permet l'utilisation d'un transducteur piézoélectrique simple et peu coûteux, sachant que le vecteur caractérisant le déplacement dans le plan de détection $P_0$ peut être déterminé comme décrit ci-après. Contrairement à l'art antérieur, la position relative de l'échantillon analysé 10 et de la source de lumière 11 ne varie pas entre deux acquisitions successives. Ainsi, la même image est projetée sur le plan de détection $P_0$, ce qui n'est pas le cas lorsque la source de lumière est déplacée par rapport à l'échantillon 10, ou réciproquement. Les inventeurs ont en effet estimé qu'il était préférable d'effectuer plusieurs acquisitions de l'image projetée sur le plan de détection, en modifiant la position du capteur d'image entre chaque acquisition, de manière à obtenir plusieurs acquisitions d'une même image projetée sur le plan de détection, ces acquisitions étant obtenues selon différentes positions du capteur d'image dans le plan de détection. La combinaison de ces acquisitions permet de former une image $I_{HR}$, dite de haute résolution, présentant une résolution spatiale améliorée.

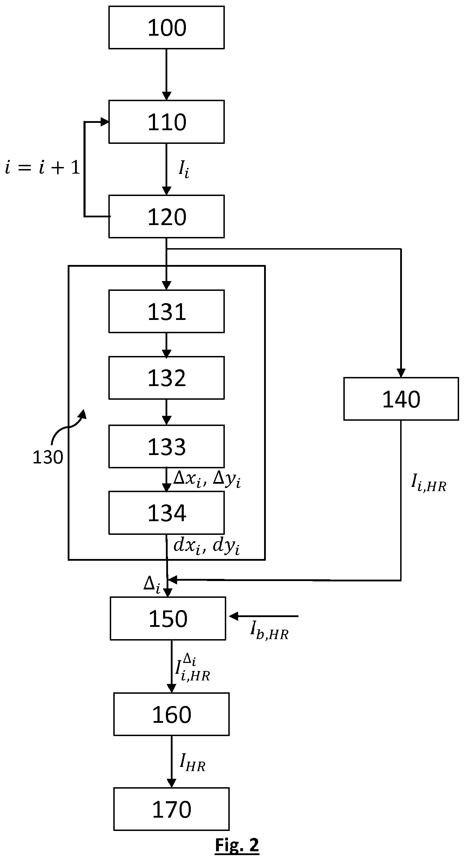

Les principales étapes d'une formation de l'image de haute résolution sont décrites ci-après, en lien avec la figure 2 :

Etape 100 : Initialisation ; illumination de l'échantillon 10 alors que le capteur matriciel est disposé dans une position initiale $(x_0, y_0)$ dans le plan de détection $P_0$. La position initiale du capteur d'image correspond à une position d'un point de référence de ce capteur, par exemple la position d'un pixel. Il peut par exemple s'agir d'une position du centre du capteur d'image, ou d'une de ses bordures.

Etape 110 : Acquisition d'une image. Lors de la première itération, on acquiert une initiale $I_{i=0}$ associée à la position initiale du capteur d'image $(x_{i=0}, y_{i=0})$ dans le plan de détection.

Etape 120 : Tant qu'un critère de sortie d'itération n'est pas atteint, activation impulsionnelle du transducteur piézoélectrique 19, de façon à modifier la position du capteur d'image dans le plan de détection, ce dernier passant d'une position $(x_i, y_i)$ à une position $(x_{i+1}, y_{i+1})$, et répétition de l'étape 110 avec une mise à jour de l'indice d'itération i. Ce dernier est un entier. Lorsque le critère de sortie de l'itération est atteint, passage à l'étape 130. Le critère de sortie d'itération est par exemple un nombre $N_i$ prédéterminé d'images acquises. L'étape 120 permet l'acquisition d'une pile d'images acquises $I_i$, avec $2 \leq i \leq N_i$. Le nombre d'images acquises peut varier entre 2 et 20. Le terme activation impulsionnelle désigne une brève activation, dont la durée est généralement inférieure à 1 seconde, typiquement de l'ordre de quelques dizaines de millisecondes, suivie d'une période de repos au cours de laquelle une image peut être acquise.

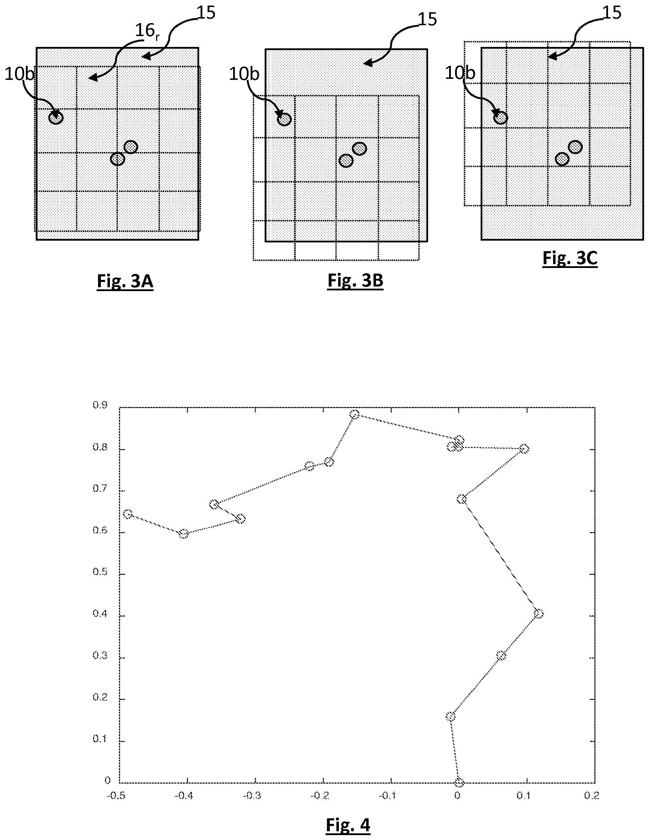

Les figures 3A, 3B et 3C représentent trois positions différentes du capteur d'image 16 par rapport à un échantillon 10 comportant trois particules 10b. Du fait que la source de lumière est immobile par rapport à l'échantillon, l'image projetée dans le plan de détection est rigoureusement identique : la projection de chaque particule dans le plan de détection est fixe. Sur ces figures, le capteur d'image a été représenté par un quadrillage délimitant des pixels $16_r$ du capteur. Le déplacement du capteur permet de faire varier la projection de chaque particule 10b, selon l'axe de propagation Z, par rapport au capteur d'image 16. Ainsi, la position relative de chaque particule par rapport à un pixel du détecteur est modifiée à chaque déplacement du capteur d'image.

Le déplacement du capteur, entre deux images successives, est de préférence inférieur à 5 pixels, ou à 10 pixels. Le champ d'observation utile, correspondant à la pile d'images acquises, est l'intersection du champ d'observation de chaque image. Aussi, la limitation du déplacement du capteur à quelques pixels permet de maximiser le champ d'observation.

Etape 130 : Estimation du déplacement $\Delta_i$ de chaque image $I_i$ par rapport à une image de référence $I_{ref-i}$. L'image de référence $I_{ref-i}$ peut être, par exemple l'image initiale $I_0$ ou l'image $I_{i-1}$ acquise précédemment à chaque image $I_i$. A l'image de référence est associée une position de référence $(x_{ref-i}, y_{ref-i})$ du capteur d'image 16. L'image de référence $I_{ref-i}$ peut être la même pour chaque image acquise, auquel cas elle est notée $I_{ref}$. Chaque déplacement est calculé par rapport à une même position de référence, de telle sorte que $(x_{ref-i}, y_{ref-i}) = (x_{ref}, y_{ref})$. On a constaté que les résultats sont optimaux lorsque pour chaque image $I_i$, l'image de référence $I_{ref-i}$ est l'image initiale $I_0$. Autrement dit, $I_{ref} = I_0$.

Le déplacement $\Delta_i$ d'une image $I_i$ est un vecteur dont les coordonnées représentent un déplacement entre l'image de référence $I_{ref-i}$ et l'image acquise $I_i$, et plus particulièrement une translation dans le plan de détection.

Plusieurs méthodes sont connues pour estimer le déplacement de deux images l'une par rapport à l'autre. Dans le cas où le déplacement se résume à une translation dans un plan, les inventeurs ont mis en œuvre une méthode basée sur un ratio entre des transformées de Fourier de l'image acquise $I_i$ considérée et de l'image de référence $I_{ref-i}$, de façon à estimer un déplacement selon un nombre entier de pixels, suivi d'une estimation d'un déplacement dit subpixelique, inférieur à la taille d'un pixel. L'étape 130 comporte alors les sous-étapes suivantes :

Sous-étape 131 : calcul des transformées de Fourier de l'image acquise $I_i$ et l'image de référence $I_{ref-i}$.

Sous-étape 132 : calcul d'un produit, terme à terme, entre les deux transformées de Fourier calculées lors de la sous-étape 131, de façon à obtenir une image résultante $I_{i/ref-i}$ telle que :

$$I_{i/ref-i} = \frac{TF(I_i)TF^*(I_{ref-i})}{\left\| TF(I_i)TF^*(I_{ref-i}) \right\|}$$

Où *TF* représente l'opérateur transformée de Fourier, cette dernière étant par exemple calculée selon un algorithme de transformée de Fourier rapide, connue sous l'acronyme *FFT,* et *TF\** représente l'opérateur transformée de Fourier conjuguée.

Sous-étape 133 : calcul d'une transformée de Fourier inverse de l'image résultante $I_{i/ref\_i}$ obtenue lors de la sous-étape précédente. On obtient une image dont l'intensité maximale correspond à un point $(\Delta x_i, \Delta y_i)$, $\Delta x_i$ et $\Delta y_i$ étant les coordonnées du vecteur représentant le déplacement $\Delta_i$ recherché selon un nombre entier de pixels dans les deux directions du plan de détection $P_0$. $\Delta x_i$ et $\Delta y_i$ sont des entiers. Ainsi, la recherche du point d'intensité maximale sur l'image, obtenue par transformée de Fourier inverse de l'image résultante $I_{i/ref-i}$, permet d'obtenir les coordonnées entières $\Delta x_i$ et $\Delta y_i$ du déplacement $\Delta_i$ recherché.

Sous-étape 134 : Estimation du déplacement subpixelique. Le déplacement $\Delta_i$ peut comporter une composante non entière, traduisant le déplacement, dit subpixelique, de l'image $I_i$ acquise selon un nombre non entier de pixels inférieur à 1. Les grandeurs $dx_i$ et $dy_i$ désignent respectivement un déplacement subpixelique dans les deux directions du plan de détection $P_0$.

L'image acquise $I_i$ peut être corrigée à l'aide des coordonnées entières $\Delta x_i$ et $\Delta y_i$ déterminées lors de la sous-étape 133 en formant une image intermédiaire $I_i^{\Delta x_i \Delta y_i}$ corrigée du déplacement selon $\Delta x_i$ et $\Delta y_i : I_i^{\Delta x_i \Delta y_i}(x,y) = I_i\left(x - \Delta x_i\,;\, y - \Delta y_i\right)$.

Si $I_i^{\Delta_i}$ désigne l'image corrigée du déplacement $\Delta_i$, avec $\Delta_i = (\Delta x_i + dx_i\,;\, \Delta y_i + dy_i)$, l'hypothèse de déplacements subpixeliques $dx_i$ et $dy_i$ permet d'établir une relation linéaire entre l'image intermédiaire $I_i^{\Delta x_i \Delta y_i}$ et l'image corrigée $I_i^{\Delta_i}$, de telle sorte que :

$$I_i^{\Delta_i}(x,y) = I_i^{\Delta x_i \Delta y_i}(x + dx_i, y + dy_i)$$

$$I_i^{\Delta_i}(x,y) = I_i^{\Delta x_i \Delta y_i}(x,y) + dx * \frac{dI_i^{\Delta x_i \Delta y_i}}{dx}(x,y) + dy * \frac{dI_i^{\Delta x_i \Delta y_i}}{dy}(x,y)$$

L'erreur $E_i(dx, dy)$ entre les images $I_i^{\Delta x_i \Delta y_i}$ et $I_i^{\Delta_i}$ peut s'écrire :

$$E_i(dx,dy) = \int (I_i^{\Delta_i}(x,y) - I_i^{\Delta x_i \Delta y_i}(x,y) - dx * \frac{dI_i^{\Delta x_i \Delta y_i}}{dx}(x,y) - dy *$$
$$\frac{dI_i^{\Delta x_i \Delta y_i}}{dy}(x,y))^2 \; dxdy$$

On peut estimer les valeurs $dx_i$ et $dy_i$ qui minimisent $E_i(dx,dy)$, avec

$$\frac{dE}{dx}(dx_i, dy_i) = 0 \text{ et } \frac{dE}{dy}(dx_i, dy_i) = 0$$

L'estimation de $dx_i$ et $dy_i$ permet d'obtenir le déplacement $\Delta_i = (\Delta x_i + dx_i\,;\, \Delta y_i + dy_i)$

L'étape 134 est optionnelle. Lorsqu'elle n'est pas mise en œuvre, le déplacement $\Delta_i$ est obtenu à l'aides des coordonnées entières $\Delta x_i$ et $\Delta y_i$ obtenues suite à la sous-étape 133.

Les sous-étapes 131 à 134 sont répétées pour chaque image acquise $I_i$, l'image de référence $I_{ref\_i}$ pouvant être par exemple l'image initiale $I_0$, ce qui correspond à la configuration préférée, ou une image précédemment acquise $I_{i-1}$.

Sur la figure 4, on a représenté les déplacements successifs $\Delta_i$ d'une pile de 16 images, la position (0,0) correspondant à la coordonnée de l'image initiale $I_0$. Les axes des abscisses et des ordonnées représentent respectivement les coordonnées de chaque déplacement $\Delta_i$ selon les axes X et Y définissant une base du plan de détection $P_0$.

Etape 140 : subpixellisation. Chaque image acquise $I_i$ est subpixellisée, par exemple d'un facteur compris entre 2 et 10. Pour cela, à partir de chaque image acquise $I_i$, on détermine une image dite subpixellisée $I_{i,HR}$, comportant davantage de pixels que l'image acquise $I_i$. L'image subpixellisée $I_{i,HR}$ peut être obtenue en divisant chaque pixel de l'image acquise $I_i$ en $N^2$ sous-pixels, $N$ étant un entier supérieur à 1. $N$ peut être par exemple égal à 4, ce qui permet d'obtenir une image subpixellisée $I_{i,HR}$ comportant 16 fois plus de pixels que l'image acquise $I_i$. La valeur des pixels de l'image subpixellisée est calculée par interpolation, par exemple bilinéaire ou bicubique, l'interpolation bicubique étant préférée. On obtient ainsi une pile d'images subpixellisées $I_{i,HR}$.

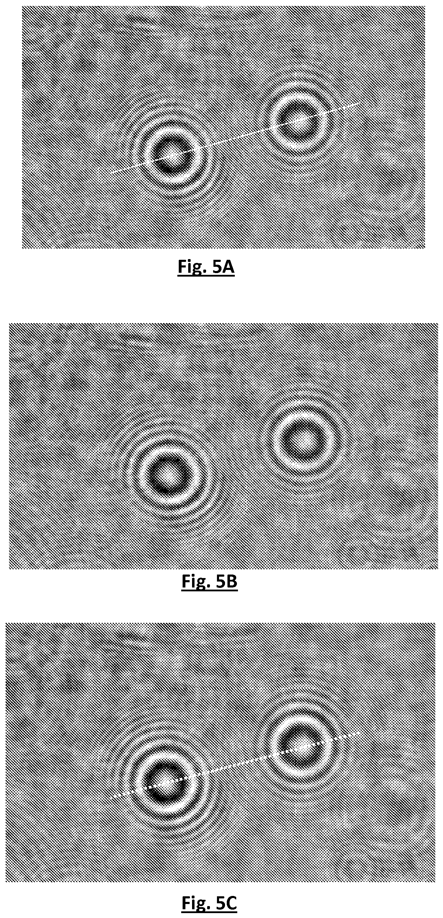

La figure 5A représente une image acquise $I_i$. La figure 5B représente un exemple d'image subpixellisée $I_{i,HR}$ correspondant à l'image acquise représentée sur la figure 5A. Ces images sont décrites plus précisément dans la suite de la description.

Etape 150 : recalage. Chaque image subpixellisée est recalée par rapport à une image subpixellisée, dite image de base $I_{b,HR}$, de la pile d'images subpixellisées. L'image de base est par exemple l'image initiale acquise et subpixellisée, auquel cas $I_{b,HR} = I_{i=0,HR}$. Chaque image subpixellisée $I_{i,HR}$ est alors recalée par rapport à l'image de base, en prenant en compte le déplacement $\Delta_i$ associé à l'image acquise $I_i$, déterminé lors de l'étape 130. On obtient ainsi une pile d'images subpixellisées et recalées, notées $I_{i,HR}^{\Delta_i}$.

L'image de base $I_{b,HR}$ utilisée pour le recalage est la même pour chaque image $I_{i,HR}$ de la pile d'images subpixellisées. Il peut s'agir de l'image initiale ($i = 0$) ou de l'image finale ($i = N_i$) ou d'une image acquise lorsque le capteur d'image est positionné dans une position particulière. Les étapes 140 et 150 peuvent être interverties, le recalage étant effectué par rapport une image de base $I_b$ avant la subpixellisation, de façon à obtenir une pile d'images recalées $I_i^{\Delta_i}$. Chaque image recalée est ensuite subpixellisée pour former une pile d'images subpixellisées et recalées, notées $I_{i,HR}^{\Delta_i}$. Cependant, les inventeurs estiment qu'il est préférable d'effectuer le recalage après la subpixellisation.

Etape 160 : combinaison des images subpixellisées et recalées $I_{i,HR}^{\Delta_i}$, de façon à obtenir une image de haute résolution $I_{HR}$. L'image de haute résolution est obtenue par une combinaison arithmétique des images subpixellisées et recalées $I_{i,HR}^{\Delta_i}$, par exemple sous la forme d'une moyenne, selon l'expression :

$$I_{HR} = mean\left(I_{i,HR}^{\Delta_i}\right)$$

Si chaque image acquise comporte $Nx \times Ny$ pixels, l'image de haute résolution comporte $N^2 \times Nx \times Ny$ pixels.

L'image de haute résolution $I_{HR}$ présente une résolution spatiale supérieure à chacune des $N_i$ images acquises. Cette image est utilisée pour caractériser les particules 10b présentes dans l'échantillon. La figure 5C représente une telle image.

Etape 170 : Caractérisation. La caractérisation de l'échantillon peut être réalisée sur la base des figures de diffraction élémentaires. Lorsque l'échantillon comporte des particules diffractantes 10b, leur caractérisation est effectuée sur la base des figures de diffraction associées à chaque particule, apparaissant sur l'image de haute résolution $I_{HR}$. Une telle caractérisation peut être effectuée directement à partir de chaque figure de diffraction élémentaire, par exemple par analyse morphologique, ou en appliquant un algorithme de reconstruction numérique à l'image de haute résolution $I_{HR}$, comme décrit par la suite.

Comme décrit en lien avec l'art antérieur, on peut appliquer, à chaque image acquise $I_i$ par le capteur d'image 16, ou à l'image de haute résolution $I_{HR}$ précédemment décrite, un opérateur de propagation h, de façon à calculer une grandeur représentative de l'onde lumineuse 22 transmise par l'échantillon 10, et à laquelle est exposé le capteur d'image 16. Un tel procédé, désigné par le terme reconstruction holographique, permet notamment de reconstruire une image du module ou de la phase de l'onde lumineuse 22, à laquelle est exposé le capteur d'image, dans un plan de reconstruction parallèle au plan de détection $P_0$, et notamment dans le plan $P_{10}$ selon lequel s'étend l'échantillon. Pour cela, on effectue un produit de convolution de l'image considérée par un opérateur de propagation h. Il est alors possible de reconstruire une expression complexe A de l'onde lumineuse 22 en tout point de coordonnées ($x,y,z$) de l'espace, et en particulier dans un plan de reconstruction $P_z$ situé à une distance |z| du capteur d'image 16, ce plan de reconstruction pouvant être le plan de l'échantillon $P_{10}$. L'expression complexe A est une grandeur complexe dont l'argument et le module sont respectivement représentatifs de la phase et de l'intensité de l'onde lumineuse 22 à laquelle est exposé le capteur d'image 16. Le produit de convolution par l'opérateur de propagation h permet d'obtenir une image complexe $A_z$ représentant une distribution spatiale de l'expression complexe A dans un plan, dit plan de reconstruction $P_z$, s'étendant à une coordonnée z du plan de détection $P_0$. Dans cet exemple, le plan de détection $P_0$ a pour équation z = 0. L'image complexe $A_z$ correspond à une image complexe de l'échantillon dans le plan de reconstruction $P_z$. Elle représente également une distribution spatiale bidimensionnelle des propriétés optiques de l'onde 22 à laquelle est exposé le capteur d'image 16.

L'opérateur de propagation h a pour fonction de décrire la propagation de la lumière entre le capteur d'image 16 et un point de coordonnées (x, y, z), situé à une distance |z| de ce dernier. Il est alors possible de déterminer le module $M(x,y,z)$ et/ou la phase $\varphi(x,y,z)$ l'onde lumineuse 22, à cette distance |z|, dite distance de reconstruction, avec :

$$M(x,y,z) = abs\,[A(x,y,z)]$$

$$\varphi(x,y,z) = arg\,[A(x,y,z)]$$

Les opérateurs *abs* et *arg* désignent respectivement le module et l'argument.

Autrement dit, l'amplitude complexe A de l'onde lumineuse 22 en tout point de coordonnées (x,y,z) de l'espace est telle que : $A(x,y,z) = M(x,y,z)e^{j\varphi(x,y,z)}$. A partir de telles reconstructions, on peut notamment former des images dites reconstruites, regroupant le module (image du module, ou image d'amplitude) ou la phase (image de phase), respectivement à partir du module $M(x, y, z)$ et de la phase $\varphi(x,y,z)$ reconstruits à une même distance z.

Des essais expérimentaux ont été réalisés en utilisant un échantillon comportant de l'eau, dans lequel baignent des particules de silice de diamètres 3 μm et 6 μm. L'échantillon est une chambre fluidique d'épaisseur 100 μm.

Les principaux paramètres expérimentaux sont les suivants :

- source de lumière : diode laser CivilLaser centrée sur 405 nm
- capteur CMOS 8 bits VFU-J003-MB, 3884 × 2764 pixels carrés de côté 1.67 μm ;
- module piézoélectrique : buzzer Kingstate KMTG1303-1, des butées étant disposées pour s'opposer à un déplacement du capteur selon l'axe Z ;
- distance entre la source de lumière et l'échantillon : 8 cm ;
- distance entre l'échantillon et le capteur d'image : 1.5 mm ;

L'algorithme décrit en lien avec les étapes 100 à 170 a été appliqué de façon à obtenir 16 images acquises $I_i$ et former une image de haute résolution $I_{HR}$. La figure 4 représente chaque déplacement $\delta_i$ entre l'acquisition de deux images successives $I_{i-1}$, $I_i$.

Les figures 5A, 5B et 5C représentent respectivement une image acquise $I_i$, une image subpixelisée $I_{i,HR}$ résultant de l'image représentée sur la figure 5A, et l'image de haute résolution $I_{HR}$ obtenue à l'issue du processus. On distingue nettement deux figures de diffraction dans la partie centrale de ces images.

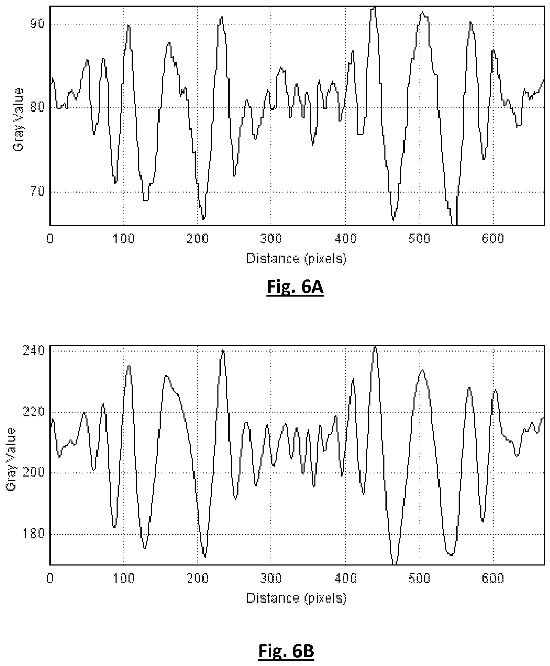

Les figures 6A et 6B montrent respectivement un profil de l'intensité des pixels des images représentées sur les figures 5A et 5C, chaque profil étant réalisé selon la ligne en pointillés blancs matérialisée sur ces dernières. L'axe des abscisses représente l'identification de pixels tandis que l'axe des ordonnées représente la valeur de l'intensité de chaque pixel. L'écart type de chaque profil a été calculé. Les valeurs obtenues sont de 5.1 et 14 respectivement sur les figures 6A et 6B. Le profil de la figure 6B, représentant l'image de haute résolution, comporte une plus grande dispersion par rapport au niveau moyen de l'image, ce qui se traduit par une meilleure définition des anneaux de diffraction de chaque figure de diffraction.

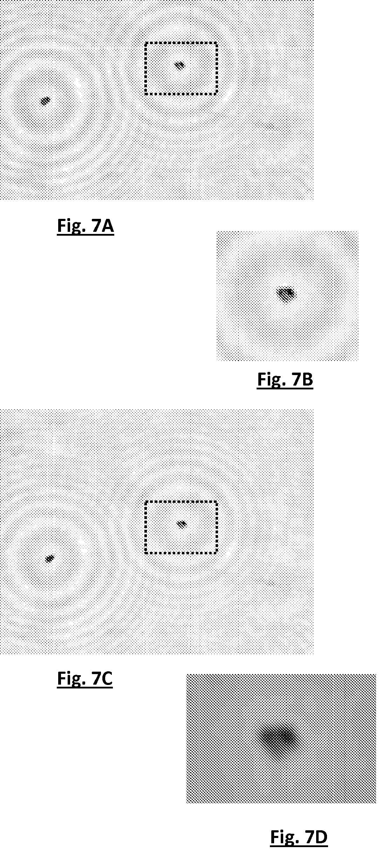

Les figures 7A et 7C illustrent des images du module $M(x,y,z)$ de l'amplitude reconstruite $A(x,y,z)$ dans un plan $P_{10}$ parallèle au plan de détection $P_0$ et par lequel passe l'échantillon 10, en se basant respectivement sur les images représentées sur les figures 5A et 5C. Ces images reconstruites ont été obtenues en mettant en œuvre l'algorithme de reconstruction décrit cidessus, avec z =1.16 mm. L'opérateur de propagation est, dans cet exemple, la fonction de Fresnel-Helmholtz, telle que :

$$h(x,y,z) = \frac{1}{j\lambda z}e^{j2\pi\frac{z}{\lambda}}\exp(j\pi\frac{x^2+y^2}{\lambda z})$$

où $x,y$ désignent des coordonnées dans un plan perpendiculaire à l'axe de propagation Z, c'est-à-dire dans le plan de détection $P_0$ ou dans le plan de l'échantillon $P_{10}$ et $\lambda$ désigne une longueur d'onde, par exemple la longueur d'onde centrale, de la bande spectrale $\Delta\lambda$. D'autres méthodes de reconstruction plus raffinées peuvent être mises en oeuvre, par exemple celles décrites dans la demande de brevet FR 1652500 déposée le 23/03/2016.

La figure 7A représente le résultat d'une reconstruction basée sur une image $I_i$ acquise par le capteur d'image. Il s'agit d'un exemple représentatif de l'art antérieur. La figure 7C montre le résultat d'une reconstruction basée sur une image de haute résolution $I_{HR}$ obtenue selon l'invention. Les figures 7B et 7D sont des zooms des régions d'intérêt matérialisées par un rectangle noir respectivement sur les figures 7A et 7C. L'objet représenté est un amas de deux billes de diamètre 6 μm et d'une petite bille de diamètre 3 μm. L'image reconstruite sur la base de l'image de haute résolution $I_{HR}$, présente une résolution spatiale suffisante pour distinguer les trois billes (cf. figure 7D), ce qui n'est pas le cas de l'image reconstruite sur la base de l'image $I_i$ acquise par le capteur d'image 16 (cf. figure 7B).

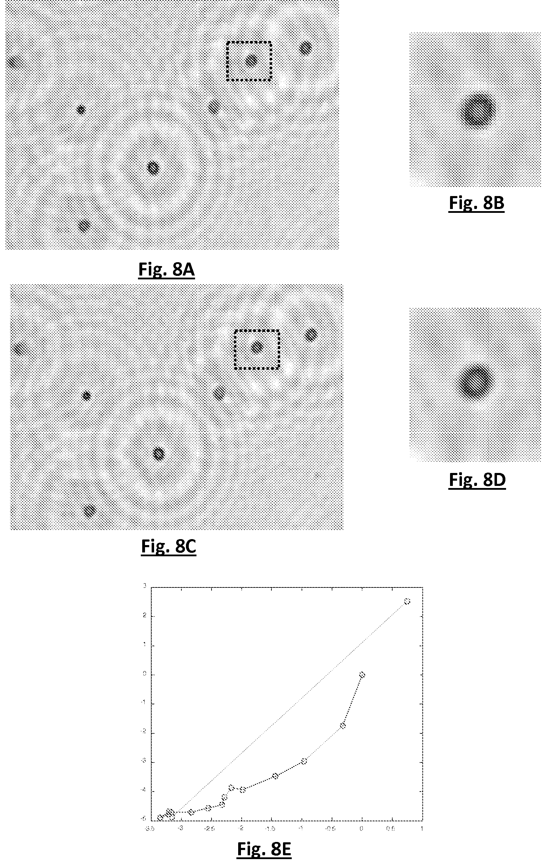

D'autres essais ont été réalisés en utilisant un échantillon comportant du sang. Du sang total a fait l'objet d'un traitement à base de Dextran pour agréger les globules rouges. Après sédimentation de ces derniers, le surnageant, comportant des globules blancs, a été récupéré, puis dilué au 1/10ième dans un tampon salin PBS (Phosphate Buffer Saline). La source de lumière est une diode électroluminescente 4 couleurs Cree sous la référence XLamp MCE Color (blanc, non utilisé - bleu 450 nm - vert 520 nm - rouge 620 nm). Cette diode comporte 4 diodes élémentaires, seule la diode élémentaire émettant dans le bleu étant utilisée dans cet essai. Les figures 8A, 8C et 8E représentent respectivement :

- une image du module $M(x,y,z)$ de l'amplitude complexe $A(x,y,z)$ reconstruite dans le plan de l'échantillon $P_{10}$, à partir d'une image acquise $I_i$ par le capteur d'image ;
- une image du module $M(x,y,z)$ de l'amplitude complexe $A(x,y,z)$ reconstruite dans le plan de l'échantillon $P_{10}$, à partir d'une image de haute résolution $I_{HR}$ obtenue en appliquant les étapes 100 à 160 ;
- le déplacement $\Delta_i$ entre l'acquisition de deux images successives $I_{i-1}, I_i$, selon une représentation similaire à celle de la figure 4.

Sur les figures 8A et 8C, les points sombres correspondent à des globules blancs. Les figures 8B et 8D sont des détails d'une région d'intérêt délimitée par un cadre respectivement sur les figures 8A et 8C. Cela permet d'apprécier l'amélioration de la résolution spatiale conférée par l'invention. La figure 8D, obtenue par reconstruction sur la base d'une image de haute résolution, présente une résolution spatiale améliorée par rapport à la figure 8B.

L'invention pourra être mise en œuvre dans le domaine de la biologie ou de la santé, mais également dans le contrôle de l'environnement, l'agroalimentaire ou d'autres procédés industriels.

## Revendications

1. Procédé de formation d'une image d'un échantillon comportant les étapes suivantes:

   a) illumination de l'échantillon (10) par une source de lumière (11) ;
   b) acquisition d'une pluralité d'images ($I_i$) de l'échantillon (10) à l'aide d'un capteur d'image (16), chaque image comportant un hologramme représentatif de l'échantillon, l'échantillon étant disposé entre la source de lumière et le capteur d'image, de telle sorte que :

   - l'échantillon (10) est immobile par rapport à la source de lumière (11) entre chaque acquisition ;
   - aucune optique de grossissement n'est disposée entre l'échantillon (10) et le capteur d'image (16);
   - le capteur d'image (16) s'étend selon un plan de détection ($P_0$), le capteur d'image étant déplacé, dans le plan de détection, entre deux acquisitions successives ;
   - chaque image acquise ($I_i$) est respectivement associée à une position ($x_i, y_i$) du capteur d'image dans le plan de détection, chaque position étant différente l'une de l'autre, chaque image acquise présentant un champ d'observation, chaque image acquise comportant des pixels ;

   c) calcul d'un déplacement ($\Delta_i$) de chaque image acquise ($I_i$) par rapport à une image de référence ($I_{ref-i}$) dans laquelle le capteur d'image (16) occupe une position de référence ($x_{ref-i}, y_{ref-i}$) ;
   d) formation d'une image ($I_{HR}$), dite image de haute résolution, à partir des images acquises ($I_i$) et du déplacement calculé ($\Delta_i$) pour chacune d'entre elles, l'image de haute résolution présentant un champ d'observation correspondant à une intersection des champs d'observation de chaque image acquise ($I_i$), l'image de haute résolution comportant davantage de pixels que chaque image acquise;
   le procédé étant **caractérisé en ce que** l'étape d) comporte :

   - l'obtention d'une pile d'images subpixelisées et recalées $(I_{i,HR}^{\Delta_i})$ à partir de chaque image acquise ($I_i$) et des déplacements ($\Delta_i$) déterminés lors de l'étape c), chaque image subpixellisée et recalée comportant un nombre de pixels supérieurs au nombre de pixels de chaque image acquise ($I_i$) ;
   - la combinaison des images subpixellisées et recalées $(I_{i,HR}^{\Delta_i})$ pour obtenir l'image de haute résolution ($I_{HR}$).

2. Procédé selon la revendication 1, dans lequel le capteur d'image (16) est solidaire d'un transducteur piézoélectrique (19), le déplacement du capteur d'image étant généré par une activation dudit transducteur piézoélectrique (19).

**3.** Procédé selon l'une quelconque des revendications 1 ou 2, dans lequel le déplacement du capteur d'image entre deux positions successives $((x_i, y_i), (x_{i+1}, y_{i+1}))$ est aléatoire.

**4.** Procédé selon l'une quelconque des revendications 1 à 3, dans lequel l'étape d) comporte les sous-étapes suivantes :

i) obtention d'une pile d'images subpixellisées, chaque image subpixellisée ($I_{i,HR}$) étant obtenue à partir d'une image acquise, l'image subpixellisée comportant un nombre de pixels supérieurs au nombre de pixels de l'image acquise ($I_i$) ;
ii) à l'aide des déplacements ($\Delta_i$) déterminés lors de l'étape c), recalage de chaque image subpixellisée ($I_{i,HR}$) de façon à obtenir une pile d'images subpixellisées et recalées $(I_{i,HR}^{\Delta_i})$ ;

iii) combinaison des images subpixellisées et recalées $(I_{i,HR}^{\Delta_i})$ pour obtenir l'image de haute résolution ($I_{HR}$).

**5.** Procédé selon l'une quelconque des revendications 1 à 3, dans lequel l'étape d) comporte les sous-étapes suivantes :

i) à l'aide des déplacements ($\Delta_i$) déterminés lors de l'étape c), recalage de chaque image acquise ($I_i$) de manière à obtenir une pile d'images recalées $(I_i^{\Delta_i})$ ;

ii) obtention d'une image recalée et subpixellisée $(I_{i,HR}^{\Delta_i})$ à partir de chaque image recalée $(I_i^{\Delta_i})$ obtenue lors de la sous-étape i), l'image recalée et subpixellisée comportant un nombre de pixels supérieur au nombre de pixels de l'image recalée, de façon à obtenir une pile d'images recalées et subpixellisées $(I_{i,HR}^{\Delta_i})$ ;

iii) combinaison des images recalées et subpixellisées $(I_{i,HR}^{\Delta_i})$ pour obtenir l'image de haute résolution ($I_{HR}$).

**6.** Procédé selon l'une quelconque des revendications 1 à 5, dans lequel chaque image acquise $I_i$) comportant une pluralité de pixels, la valeur maximale du déplacement ($\Delta_i$) entre deux images acquises successives ($I_i$, $I_{i-1}$) est de 5 fois ou 10 fois la distance entre deux pixels adjacents de chaque image acquise.

**7.** Procédé selon l'une quelconque des revendications 1 à 6, comportant l'étape suivante :

e) application d'un opérateur de propagation numérique (h) à l'image résultante et détermination d'une amplitude complexe ($A$) d'une onde lumineuse (22) à laquelle est exposé le capteur d'image.

**8.** Dispositif pour réaliser une image d'un échantillon (10) comportant :

- une source de lumière (11), configurée pour illuminer l'échantillon;
- un capteur d'image (16), l'échantillon étant disposé entre la source de lumière (11) et le capteur d'image (16), aucune optique de grossissement n'étant disposée entre l'échantillon (10) et le capteur d'image (16), et l'échantillon étant immobile par rapport à la source de lumière;
- le capteur d'image étant configuré pour acquérir une image ($I_i$), dans un plan de détection ($P_0$), d'une onde lumineuse (22) transmise par l'échantillon sous l'effet de l'illumination par ladite source de lumière ;
le dispositif étant **caractérisé en ce qu'**il comporte également :
- un transducteur piézoélectrique (19), relié au capteur d'image, configuré pour induire un déplacement ($\Delta_i$) du capteur d'image (16) dans le plan de détection ($P_0$) ;
- un processeur (20), configuré pour traiter une pluralité d'images acquises ($I_i$), par le capteur d'image, de l'échantillon (10), chaque image acquise étant respectivement associée à une position ($x_i, y_i$) du capteur d'image (16) dans le plan de détection ($P_0$), chaque position étant différente l'une de l'autre ;
- le processeur étant configuré pour mettre en oeuvre les étapes c) et d) d'un procédé selon l'une quelconque des revendications 1 à 7.

**Patentansprüche**

1.  Verfahren zum Bilden eines Bilds einer Probe, das die folgenden Schritte umfasst:

    a) Beleuchten der Probe (10) mit einer Lichtquelle (11);
    b) Erfassen einer Mehrzahl von Bildern ($I_i$) der Probe (10) mithilfe eines Bildsensors (16), wobei jedes Bild ein für die Probe repräsentatives Hologramm umfasst, wobei die Probe zwischen der Lichtquelle und dem Bildsensor derart angeordnet ist, dass:

    - die Probe (10) in Bezug auf die Lichtquelle (11) zwischen jeder Erfassung unbeweglich ist;
    - keine Vergrößerungsoptik zwischen der Probe (10) und dem Bildsensor (16) angeordnet ist;
    - der Bildsensor (16) sich entlang einer Detektionsebene ($P_0$) erstreckt, wobei der Bildsensor, in der Detektionsebene, zwischen zwei aufeinanderfolgenden Erfassungen verlagert wird;
    - jedes erfasste Bild ($I_i$) jeweils einer Position ($x_i, y_i$) des Bildsensors in der Detektionsebene zugeordnet wird, wobei jede Position von den anderen verschieden ist, wobei jedes erfasste Bild ein Betrachtungsfeld aufweist, wobei jedes erfasste Bild Pixel umfasst;

    c) Berechnen einer Verlagerung ($\Delta_i$) jedes erfassten Bilds ($I_i$) in Bezug auf ein Referenzbild ($I_{ref\text{-}i}$), in dem der Bildsensor (16) eine Referenzposition ($x_{ref\text{-}i}, y_{ref\text{-}i}$) einnimmt;
    d) Bilden eines Bilds ($I_{HR}$), hochaufgelöstes Bild genannt, ausgehend von den erfassten Bildern ($I_i$) und der für jedes von ihnen berechneten Verlagerung ($\Delta_i$), wobei das hochaufgelöste Bild ein Betrachtungsfeld aufweist, das einer Überschneidung der Betrachtungsfelder jedes erfassten Bilds ($I_i$) entspricht, wobei das hochaufgelöste Bild mehr Pixel als jedes erfasste Bild umfasst;
    wobei das Verfahren **dadurch gekennzeichnet ist, dass** der Schritt d) umfasst:

    - das Erhalten eines Stapels von subgepixelten und registrierten Bildern $\left(I_{i,HR}^{\Delta_i}\right)$ ausgehend von jedem erfassten Bild ($I_i$) und den beim Schritt c) bestimmten Verlagerungen ($\Delta_i$), wobei jedes subgepixelte und registrierte Bild eine Anzahl von Pixeln umfasst, die höher als die Anzahl von Pixeln jedes erfassten Bilds ($I_i$) ist;

    - das Kombinieren der subgepixelten und registrierten Bilder $\left(I_{i,HR}^{\Delta_i}\right)$, um das hochaufgelöste Bild ($I_{HR}$) zu erhalten.

2.  Verfahren nach Anspruch 1, bei dem der Bildsensor (16) fest mit einem piezoelektrischen Wandler (19) verbunden ist, wobei die Verlagerung des Bildsensors durch eine Aktivierung des piezoelektrischen Wandlers (19) erzeugt wird.

3.  Verfahren nach einem der Ansprüche 1 oder 2, bei dem die Verlagerung des Bildsensors zwischen zwei aufeinanderfolgenden Positionen (($x_i, y_i$), ($x_{i+1}, y_{i+1}$)) zufällig ist.

4.  Verfahren nach einem der Ansprüche 1 bis 3, bei dem der Schritt d) die folgenden Teilschritte umfasst:

    i) Erhalten eines Stapels von subgepixelten Bildern, wobei jedes subgepixelte Bild ($I_{i,HR}$) ausgehend von einem erfassten Bild erhalten wird, wobei das subgepixelte Bild eine Anzahl von Pixeln umfasst, die höher als die Anzahl von Pixeln des erfassten Bilds ($I_i$) ist;
    ii) Registrieren jedes subgepixelten Bilds ($I_{i,HR}$) mithilfe der beim Schritt c) bestimmten Verlagerungen ($\Delta_i$) derart, dass ein Stapel von subgepixelten und registrierten Bildern $\left(I_{i,HR}^{\Delta_i}\right)$ erhalten wird;

    iii) Kombinieren der subgepixelten und registrierten Bilder $\left(I_{i,HR}^{\Delta_i}\right)$, um das hochaufgelöste Bild ($I_{HR}$) zu erhalten.

5.  Verfahren nach einem der Ansprüche 1 bis 3, bei dem der Schritt d) die folgenden Teilschritte umfasst:

    i) Registrieren jedes erfassten Bilds ($I_i$) mithilfe der beim Schritt c) bestimmten Verlagerungen ($\Delta_i$) derart, dass ein Stapel von registrierten Bildern $\left(I_i^{\Delta_i}\right)$ erhalten wird;
    ii) Erhalten eines registrierten und subgepixelten Bilds $\left(I_{i,HR}^{\Delta_i}\right)$ ausgehend von jedem beim Teilschritt i) erhaltenen registrierten Bild $\left(I_i^{\Delta_i}\right)$, wobei das registrierte und subgepixelte Bild eine Anzahl von Pixeln umfasst, die höher als die Anzahl von Pixeln des registrierten Bildes ist, so dass ein Stapel von registrierten und subgepixelten Bildern $\left(I_{i,HR}^{\Delta_i}\right)$ erhalten wird;

iii) Kombinieren der registrierten und subgepixelten Bilder $\left(I_{i,HR}^{\Delta_i}\right)$, um das hochaufgelöste Bild ($I_{HR}$) zu erhalten.

6. Verfahren nach einem der Ansprüche 1 bis 5, bei dem jedes erfasste Bild ($I_i$) eine Mehrzahl von Pixeln umfasst, wobei der höchste Wert der Verlagerung ($\Delta_i$) zwischen zwei aufeinanderfolgenden erfassten Bildern ($I_i$, $I_{i-1}$) das 5- oder 10-Fache des Abstands zwischen zwei benachbarten Pixeln jedes erfassten Bilds beträgt.

7. Verfahren nach einem der Ansprüche 1 bis 6, das den folgenden Schritt umfasst:

   e) Anwenden eines numerischen Ausbreitungsoperators (h) auf das resultierende Bild und Bestimmen einer komplexen Amplitude ($A$) einer Lichtwelle (22), mit welcher der Bildsensor belichtet wird.

8. Vorrichtung zum Erstellen eines Bilds einer Probe (10), umfassend:

   - eine Lichtquelle (11), die dazu ausgestaltet ist, die Probe zu beleuchten;
   - einen Bildsensor (16), wobei die Probe zwischen der Lichtquelle (11) und dem Bildsensor (16) angeordnet ist, wobei keine Vergrößerungsoptik zwischen der Probe (10) und dem Bildsensor (16) angeordnet ist und wobei die Probe in Bezug auf die Lichtquelle unbeweglich ist;
   - wobei der Bildsensor dazu ausgestaltet ist, ein Bild ($I_i$), in einer Detektionsebene ($P_0$), einer Lichtwelle (22) zu erfassen, die von der Probe unter der Wirkung der Beleuchtung durch die Lichtquelle durchgelassen wird; wobei die Vorrichtung **dadurch gekennzeichnet ist, dass** sie ferner umfasst:
   - einen mit dem Bildsensor verbundenen piezoelektrischen Wandler (19), der dazu ausgestaltet ist, eine Verlagerung ($\Delta_i$) des Bildsensors (16) in der Detektionsebene (Po) zu bewirken;
   - einen Prozessor (20), der dazu ausgestaltet ist, eine Mehrzahl von vom Bildsensor erfassten Bildern der Probe (10) zu verarbeiten, wobei jedes erfasste Bild jeweils einer Position ($x_i, y_i$) des Bildsensors (16) in der Detektionsebene (Po) zugeordnet wird, wobei jede Position von den anderen verschieden ist;
   - wobei der Prozessor dazu ausgestaltet ist, die Schritte c) und d) eines Verfahrens nach einem der Ansprüche 1 bis 7 durchzuführen.

## Claims

1. Method for forming an image of a sample comprising the following steps:

   a) illuminating the sample (10) with a light source (11);
   b) acquiring a plurality of images ($I_i$) of the sample (10) using an image sensor (16), each image comprising a hologram representative of the sample, the sample being placed between the light source and the image sensor, such that:

   - the sample (10) is immobile with respect to the light source (11) between each acquisition;
   - no magnifying optics are placed between the sample (10) and the image sensor (16);
   - the image sensor (16) lies in a detection plane ($P_0$), the image sensor being moved, in the detection plane, between two successive acquisitions;
   - each acquired image ($I_i$) is respectively associated with a position ($x_i, y_i$) of the image sensor in the detection plane, each position being different from the next, each acquired image having a field of observation, each acquired image containing pixels;

   c) calculating a movement ($\Delta_i$) of each acquired image with respect to a reference image ($I_{ref-i}$) in which the image sensor (16) occupies a reference position ($X_{ref-i}, Y_{ref-i}$);
   d) forming an image ($I_{HR}$), called the high-resolution image, from the acquired images and the movement ($\Delta_i$) calculated for each thereof, the high-resolution image having a field of observation corresponding to an intersection of the fields of observation of each acquired image ($I_i$), the high-resolution image containing more pixels than each acquired image;

the method being **characterized in that** step d) comprises:

- obtaining a stack of subpixelated and aligned images $\left(I_{i,HR}^{\Delta_i}\right)$ from each acquired image and the movements ($\Delta_i$) determined in step c), each subpixelated and aligned image containing a number of pixels higher than the number of pixels of each acquired image ($I_i$);

- combining the subpixelated and aligned images $\left(I_{i,HR}^{\Delta_i}\right)$ in order to obtain the high-resolution image ($I_{HR}$).

2. Method according to Claim 1, wherein the image sensor (16) is securely fastened to a piezoelectric transducer (19), the movement of the image sensor being generated by activation of said piezoelectric transducer (19).

3. Method according to either one of Claims 1 and 2, wherein the movement of the image sensor between two successive positions (($x_i,y_i$), ($x_{i+1},y_{i+1}$)) is random.

4. Method according to any one of Claims 1 to 3, wherein step d) comprises the following substeps:

i) obtaining a stack of subpixelated images, each subpixelated image ($I_{i,HR}$) being obtained from an acquired image, the subpixelated image containing a number of pixels higher than the number of pixels of the acquired image ($I_i$);

ii) using the movements ($\Delta_i$) determined in step c), aligning each subpixelated image ($I_{i,HR}$) so as to obtain a stack of subpixelated and aligned images $\left(I_{i,HR}^{\Delta_i}\right)$;

iii) combining the subpixelated and aligned images $\left(I_{i,HR}^{\Delta_i}\right)$ in order to obtain the high-resolution image ($I_{HR}$).

5. Method according to any one of Claims 1 to 3, wherein step d) comprises the following substeps:

i) using the movements ($\Delta_i$) determined in step c), aligning each acquired image ($I_i$) so as to obtain a stack of aligned images $\left(I_i^{\Delta_i}\right)$;

ii) obtaining an aligned and subpixelated image $\left(I_{i,HR}^{\Delta_i}\right)$ from each aligned image $\left(I_i^{\Delta_i}\right)$ obtained in substep i), the aligned and subpixelated image containing a number of pixels higher than the number of pixels of the aligned image, so as to obtain a stack of aligned and subpixelated images $\left(I_{i,HR}^{\Delta_i}\right)$;

iii) combining the aligned and subpixelated images $\left(I_{i,HR}^{\Delta_i}\right)$ in order to obtain the high-resolution image ($I_{HR}$).

6. Method according to any one of Claims 1 to 5, wherein each acquired image containing a plurality of pixels, the maximum value of the movement ($\Delta_i$) between two successive acquired images ($I_i$, $I_{i-1}$) is 5 times or 10 times the distance between two adjacent pixels of each acquired image.

7. Method according to any one of Claims 1 to 6, comprising the following step:

e) applying a numerical propagation operator ($h$) to the resulting image and determining a complex amplitude ($A$) of a light wave (22) to which the image sensor is exposed.

8. Device for producing an image of a sample (10) comprising:

- a light source (11), configured to illuminate the sample;
- an image sensor (16), the sample being placed between the light source (11) and the image sensor (16), no magnifying optics being placed between the sample (10) and the image sensor (16), and the sample being immobile with respect to the light source;
- the image sensor being configured to acquire an image ($I_i$), in a detection plane ($P_0$), of a light wave (22) transmitted by the sample under the effect of the illumination by said light source;

the device being **characterized in that** it also comprises:

- a piezoelectric transducer (19) that is connected to the image sensor and configured to induce a movement ($\Delta_i$) of the image sensor (16) in the detection plane ($P_0$);
- a processor (20) that is configured to process a plurality of images ($I_i$), acquired by the image sensor, of the sample (10), each acquired image being respectively associated with a position ($x_i, y_i$) of the image sensor (16) in the detection plane ($P_0$), each position being different from the next;
- the processor being configured to implement steps c) and d) of a method according to any one of Claims 1 to 7.

**Fig. 1**

$i = i + 1$

$I_i$

$\Delta x_i, \Delta y_i$

$dx_i, dy_i$

$\Delta_i$

$I_{i,HR}$

$I_{b,HR}$

$I_{i,HR}^{\Delta_i}$

$I_{HR}$

**Fig. 2**

**Fig. 3A**

**Fig. 3B**

**Fig. 3C**

**Fig. 4**

**Fig. 5A**

**Fig. 5B**

**Fig. 5C**

**Fig. 6A**

**Fig. 6B**

**Fig. 7A**

**Fig. 7B**

**Fig. 7C**

**Fig. 7D**

Fig. 8A

Fig. 8B

Fig. 8C

Fig. 8D

Fig. 8E

**EP 3 545 362 B1**

**Documents brevets cités dans la description**

- WO 2008090330 A
- US 20120218379 A
- US 8866063 B
- US 2016334614 A
- FR 1652500